# EUROPEAN PATENT APPLICATION

(11) **EP 1 211 642 A2**
(43) Date of publication of application: **05.06.2002**
(21) Application number: 01203596.0
(22) Date of filing: 24.09.2001
(51) Int. Cl.: G06T 5/40

(54) **Interactive enhancement of multiple exposure digital radiographics**

(30) Priority: 04.10.2000 US 679225
(71) Applicant: EASTMAN KODAK COMPANY, Rochester, New York 14650 (US)
(72) Inventor: Kohm, Kevin S., c/o Eastman Kodak Company, Rochester, New York 14650-2201 (US); Levy, Teresa M., c/o Eastman Kodak Company, Rochester, New York 14650-2201 (US); Wang, Xiaohui, c/o Eastman Kodak Company, Rochester, New York 14650-2201 (US)
(74) Representative: Parent, Yves

(57) **Abstract**

A system is disclosed which performs interactive enhancement processing on radiographic images containing multiple exposure fields. First, individual exposure fields are identified. Default enhancement processing is then applied to each exposure field. Enhancement may include tone scale processing, spatial frequency enhancement and calibration look-up tables (LUTs). The exposure fields are displayed and the operator is allowed to modify the enhancement processing parameters interactively. When an enhancement parameter is changed, the resulting effect on the exposure field is automatically displayed to the user. The parameter changes may be applied globally to all exposure fields in the image or individually to a single exposure field in the image.

## Description

This invention relates in general to digital projection radiography and in particular to the interactive enhancement processing of multiple radiation fields on a softcopy workstation.

In screen/film radiography and computed radiography (CR), certain exams are performed where the technologist exposes a patient multiple times using the same cassette. For example, a patient may require an anterior-posterior (AP) and lateral view of the hand. The technologist may first expose the AP projection by collimating or shielding the radiographic plate in all regions except where the hand is physically located. For the lateral exposure, the hand is positioned onto a previously unexposed portion of the plate, again the exposure field is collimated to contain only the region where the hand is located and the exposure is made. This produces a single image in which two sub-images or exposure fields are contained. For improved image quality with CR, each exposure field can be segmented and may have digital image enhancement processing applied separately. Even with the image quality improvement gained by enhancing each exposure field independently, an individual exposure field may be rendered sub-optimally. There is a need to interactively modify the enhancement parameters of each exposure field independent of the other exposure fields in the same image.

Two areas of digital image processing are relevant. The first area is general digital image enhancement processing for digital radiographs. The second area is image processing to segment radiation fields in multiple exposure radiographs.

U.S. Patent 5,270,530, inventor Godlewski et al., issued December 14, 1993 and U.S. Patent 5,014,045, inventor Shimura et al., issued May 7, 1991, describe radiographic image processing workstations for the enhancement of computed radiography images. In both patents, the entire image is considered as one exposure field for enhancement processing.

U.S. Patent 5,633,511, inventor Lee et al., issued May 27, 1997 describes a method for adjusting the tone scale for digital radiographic images. In this processing, a region of interest is calculated, however, one bounding box is formed around all exposure fields of subsequent processing.

In U.S. Patent application 09/015,656, inventor Wang et al., filed on January 29, 1998, there is disclosed a method for automatically determining multiple radiation fields in a digital radiographic image. In addition, each exposure field may be processed through a unique processing chain. This patent application however, does not address the problem of interactively adjusting the enhancement for each exposure field.

U.S. Patent 5,651,042, inventor Dewaele, issued July 22, 1997, U.S. Patent 5,764,791, inventor Hara, issued June 9, 1998 and U.S. Patent 5,732,149, inventor Kido et al., issued March 24, 1998, all describe methods for detecting and segmenting exposure fields in a multiple exposure image. None of these patents address the problem of enhancing each exposure field independently and further providing interactive enhancement control of each exposure field.

According to the present invention, there is provided a solution to the problems discussed above.

According to a feature of the present invention, there is provided
a method for an interactive multiple exposure enhancement system comprising;
providing an original digital image determining the location of the exposure field in the original digital image;
applying default enhancement processing independently to each said exposure field to create enhanced exposure fields;
displaying said enhanced exposure fields on a display;
allowing interactive modification of processing parameters of a single selected exposure field;
automatically reprocessing said selected exposure field to create a reprocessed selected exposure field; and
re-displaying said exposure fields on said display using said reprocessed selected exposure field.

The invention has the following advantages.
1. This invention enables the user to interactively modify the enhancement on any or all exposure fields in a multiple exposure digital radiograph.

Fig. 1 is a block diagram of the image processing and enhancement chain of the present invention.

Fig. 2 is a block diagram showing the relationship between image acquisition, processing, user interface and display.

Fig. 3 is an annotated drawing view of the example multiple exposure image of Fig. 4.

Fig. 4 is a diagrammatic view of an actual example of a multiple exposure image after default enhancement processing; and

Fig. 5 is a block diagram showing additional detail of the tone scale processing denoted in Fig. 1.

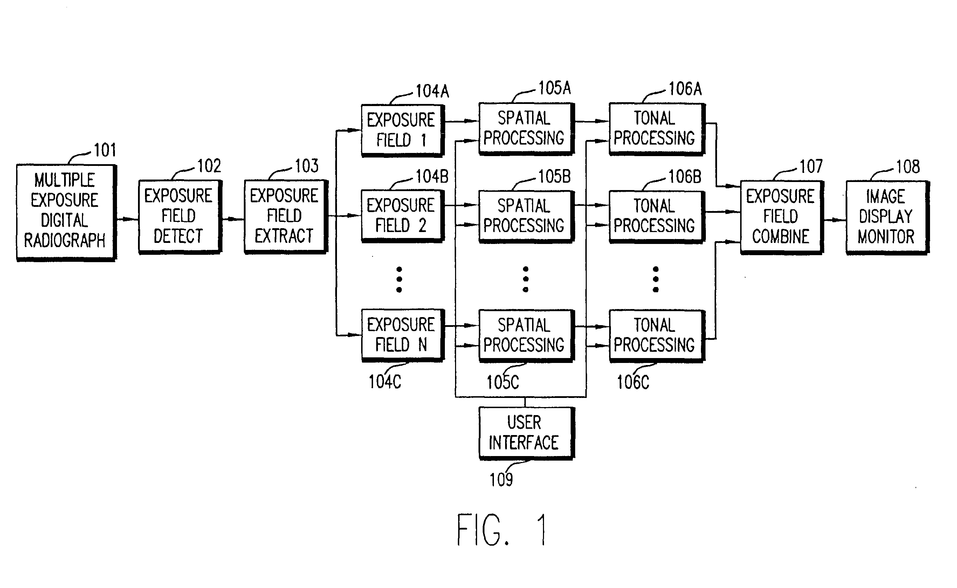

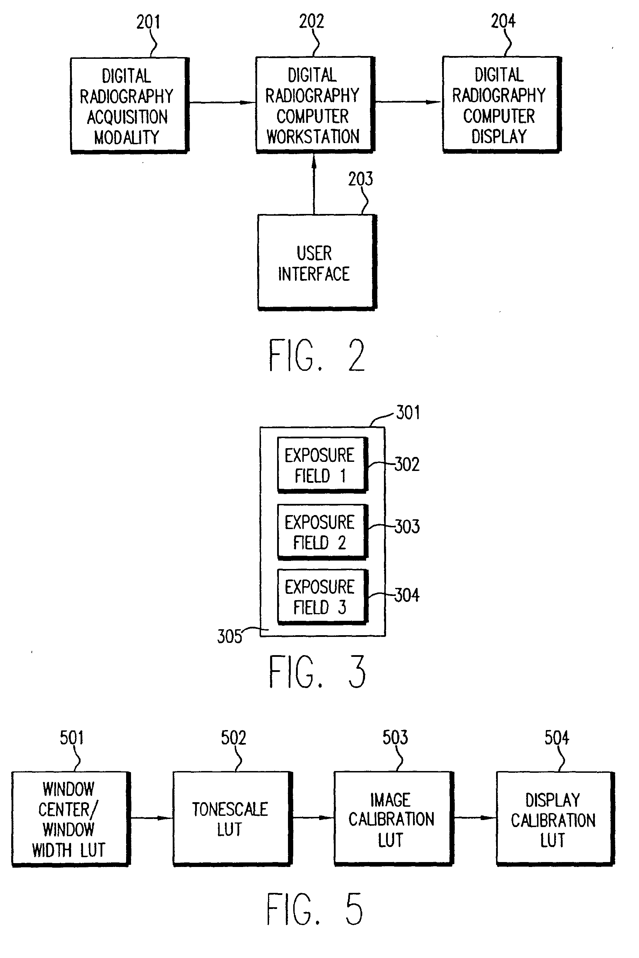

The image processing chain of the present invention shown in Fig. 1. This figure describes the steps necessary to process an acquired multiple exposure image and enable independent manipulation of enhancement parameters on each exposure field. This processing chain is part of a large system described in Fig. 2. A multiple exposure image is captured via a digital radiography acquisition modality 201. The acquired image is then transmitted to a digital radiography computer workstation 202. A user selects the image for viewing via the user interface 203. The digital radiography computer workstation 202 enhances the acquired image through the image processing chain defined in the present invention and subsequently displays the enhanced image on the digital radiography computer display 204. Modifications to the enhancement parameters are selected by the user through the user interface 203. The digital radiography computer workstation 202 re-processes the image using the newly selected parameters and again displays the resulting image on the digital radiography computer display 204.

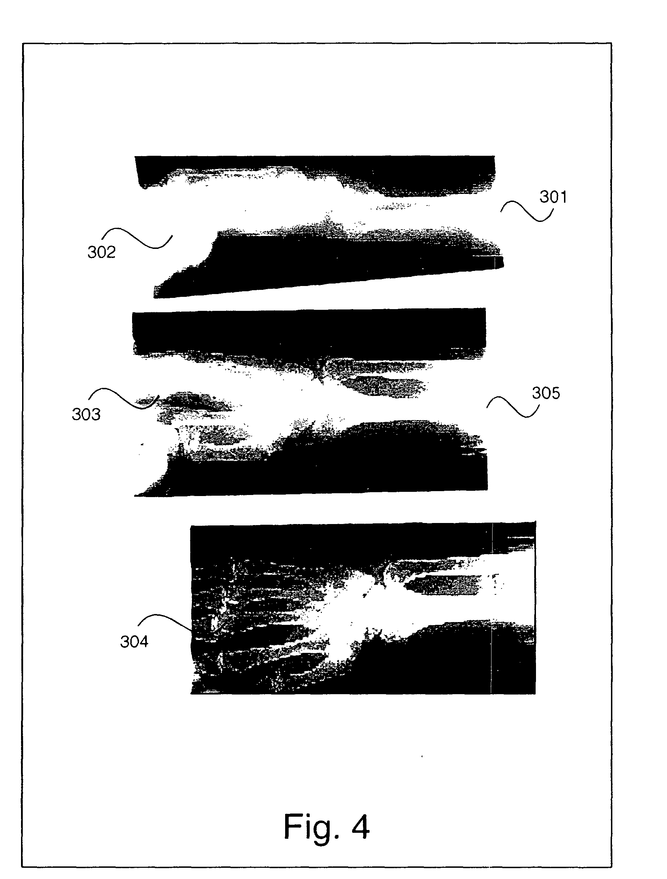

A diagram of the typical multiple exposure image is shown in Fig. 3, with the actual enhanced image shown in Fig. 4. The image represented in Fig. 3 has the following components. The full multiple exposure image 301 contains three exposure fields; exposure field 1 302, exposure field 2 303 and exposure field 3 (304). The area of the multiple exposure image 301 not covered by the exposure fields 302, 303, 304 is considered image foreground 305. The image foreground 305 is an area of minimal exposure and as such is inherently white after enhancement processing. In the preferred embodiment the image foreground 305 is masked such that it is displayed as black.

The detailed image processing chain of the preferred embodiment will be described by referencing Fig. 1. An unenhanced multiple exposure digital radiograph 101 is first processed by the exposure field detect 102 algorithm. The purpose of this processing step is to identify the number of exposure fields and location of each exposure field in the multiple exposure digital radiograph 101. The algorithm used in the preferred embodiment for exposure field detect 102 is that disclosed by Wang et al., U.S. Patent Application 09/015,656, entitled Method for Recognizing Multiple Irradiation Fields in Digital Radiography. Consider for this example that N exposure fields are detected. The exposure field extract 103 process is then performed. The purpose of this processing step is to create N sub-images, each containing one exposure field. For the case of this example, the N sub-images are denoted in Fig. 1 as exposure field 1 104A, exposure field 2 104B, and exposure field N 104C. Each sub-image is now processed through a separate processing chain. Exposure field 1 104A first has spatial processing 105A applied and then tonal processing 106A. In the preferred embodiment, spatial processing 105A includes two unsharp masking operations. The first operation performs general edge enhancement and in the preferred embodiment is the unsharp mask algorithm described in U.S. Patent 5,270,530, inventor Godlewski et al., titled Digital Radiographic Image Quality Control Workstation Operable in Manual or Pass-Through Modes: The second operation performs adaptive contrast enhancement and in the preferred embodiment is the algorithm disclosed in U.S. Patent 5,978,518, inventor Oliyide et al., issued November 2, 1999.

Tonal processing 106A in the preferred embodiment consists of multiple look-up tables (LUTs). The preferred embodiment cascades four LUTs together into a single LUT for application. The following description refers to Fig. 5 for the description of the LUT processing. The first LUT is a window center/window width LUT 501. The window center/window width LUT 501 selects an input range of digital code values from the digital input image to use in subsequent processing steps and is common in medical image processing. By default, the window is set to select the full range of image data. The second LUT is a tone scale LUT 502. The tone scale LUT 502 determines the overall tone of the image and is similar to selecting the speed, contrast, toe and shoulder of an analog film system. In the preferred embodiment, the tone scale LUT 502 is calculated by the method disclosed in U.S. Patent 5,633,511, inventor Lee et al., titled Automatic Tone Scale Adjustment Using Image Activity Measures. The third LUT in the preferred embodiment is an image calibration LUT 503 that maps the output from the tone scale LUT to the CRT calibration function. The image calibration LUT 503 may be set to linear, or removed, if the output of the tone scale LUT matches the CRT calibration function. In general, however, this is not true. The fourth LUT of the preferred embodiment is a display calibration LUT 504. The display calibration LUT 504 compensates the inherent response of the display to a fixed luminance response. Again, this LUT may be linear, or removed if the display responds to the desired luminance response, however in general the LUT is required.

The preferred embodiment uses a multiple exposure digital radiograph 101 from a Kodak Computed Radiography system. Using an image from this system, the four LUTs are constructed as follows. The window center/window width LUT 501 accepts log exposure values as input and outputs scaled log exposure values. The tone scale LUT 502 accepts scaled log exposure values and output code values linear in optical density. The image calibration LUT 503 accepts linear in optical density values and outputs values to be displayed on a DICOM Standard Display. The display calibration LUT 504 outputs code values to a CRT such that the input responds to the DICOM Standard Display Function.

The enhancement chain described above is then applied to each individual exposure field 104A, 104B, 104C. Exposure field combine 107 processing is then performed. Exposure field combine 107 constructs a displayed image from the enhanced exposure fields (i.e., the output of 106A, 106B, 106C using the relative positions of those exposure fields to the overall image determined by the exposure field extract 103 algorithm. The exposure field combine 107 processing can be implemented in multiple ways. One method for implementation is to perform the combination in software. In this case, an output image array is created in memory that matches the size of the original multiple exposure digital radiograph 101. Then, each processed exposure field (i.e., the output of 106A, 106B, 106C) is inset into the output image array in memory. The output image array is then displayed on the image display monitor 108. Another method for implementation may use certain features of the video display controller to reduce processing time. In this case, each processed exposure field (i.e., the output of 106A, 106B, 106C) is directly written to the appropriate location on the video display controller, eliminating the need to inset the exposure fields in computer memory prior to display. Again, the exposure field extract 103 algorithm determines the location of the exposure fields. Further optimization may be achieved with specialized graphics hardware, which can apply hardware look-up tables to the images in video memory. An example of graphics hardware that includes this capability is the Barco 5MP1H Graphics Controller, Barco Medical Imaging Systems, Kortrijk, Belgium.

At this point in the processing, the original multiple exposure digital radiograph has default enhancement processing applied to each exposure field and is displayed. As described earlier, the operator may then modify the enhancement processing via the user interface 109. This is the central part of the present invention. Specific examples of this process are described as follows.

Consider the case where the operator would like to modify the window center/window width LUT 501 on exposure field 1 104A. First, the operator selects the exposure field to modify via the user interface 109. This can be performed by multiple methods including, but not limited to , selecting the exposure field from a drop down list, pointing and clicking on a graphical representation of the exposure fields or pointing and clicking on the exposure field in the displayed image. Then, the operator modifies the window center/window width LUT 501 via the user interface 109. Common implementations for adjusting the window center/window width LUT 501 include using slider bars or using a mouse dragging technique whereby dragging the mouse horizontally increases or decreases window width and dragging the mouse vertically increases or decreases window level. Other methods of adjustment are possible. At this point, operator intervention to perform the window center/window width adjustment is complete. The window center/window width LUT 501 is modified and cascaded with the other LUTs 502, 503 and 504 for exposure field 1 104A. The output of the spatial processing 105A for exposure field 1 104A is then used to perform the tonal processing 106A. The exposure field combine 107 processing is again performed and the image with the new window center/window width parameter for exposure field 1 is displayed on the image display monitor 108.

Now consider the case where the operator would like to modify the window center/window width LUT 501 on all exposure fields 104A, 104B, and 104C. First, the operator selects all exposure fields to modify via the user interface 109. Then, the operator modifies the window center/window width LUT 501 via the user interface 109. At this point, operator intervention to perform the window center/window width adjustment is complete. The window center/window width LUT 501 is modified and cascaded with the other LUTs 502, 503 and 504 for each exposure field 104A, 104B, 104C. The output of the spatial processing 105A for exposure field 1 104A is then used to perform the tonal processing 106A. The output of the spatial processing 105B for exposure field 2 104B is then used to perform the tonal processing 106B. The output of the spatial processing 105C for exposure field 3 104C is then used to perform the tonal processing 106C. The exposure field combine 107 processing is again performed and the image with the new window center/window width parameters for all exposure fields is displayed on the image display monitor 108. It is worth noting that in the preferred embodiment, when an enhancement parameter is modified that applies to all exposure fields, the modification is relative to the current parameters. In this example, the window center/window width LUT 501 has already been modified for exposure field 1 104A. Therefore, if the user increases the window level parameter by 50 digital code values, the window level parameter for each exposure field is increased by 50 digital code values as opposed to all of the exposure fields having the same window center value. While a particular implementation may choose to set all enhancement parameters to the same value, the preferred embodiment uses relative values.

Now consider the case where the high frequency gain edge enhancement parameter of spatial processing 105B is modified for exposure field 2 104B. First, the operator selects the exposure field to modify via the user interface 109. Then, the operator modifies the high frequency gain edge enhancement parameter via the user interface 109. A common implementation for adjusting the high frequency gain edge enhancement parameter is via a slider. Other methods of adjustment are possible. At this point, operator intervention to perform high frequency gain edge enhancement parameter adjustment is complete. The output of exposure field 2 104B is used to perform the spatial processing 105B. Tonal processing 106B is applied to the output of the spatial processing 105B. Finally, the exposure field combine 107 processing is performed and the image with the new high frequency gain edge enhancement parameter for exposure field 2 104B is displayed on the image display monitor 108.

Other interactive modifications to the described enhancement chain are possible. Although not explicitly described, the modifications follow the same form as described above. It is expected that any individual reasonably experienced in the art may extend the interactive nature to other enhancement processing components described in the present invention.

## Claims

1. A method for an interactive multiple exposure enhancement system comprising:
providing an original digital image determining the location of the original digital image;
applying default enhancement processing independently to each said exposure field to create enhanced exposure fields;
displaying said enhanced exposure fields on a display;
allowing interactive modification of processing parameters of a single selected exposure field;
automatically reprocessing said selected exposure field to create a reprocessed selected exposure field; and
re-displaying said exposure fields on said display using said reprocessed selected exposure field.

2. The method of claim 1 wherein said interactive modification of processing parameters is applied to all said exposure fields in the original image.

3. The method of claim 1 wherein a blackened surround is applied to the image area not covered by said exposure fields.

4. The method of claim 2 wherein a blackened surround is applied to the image area not covered by said exposure fields.

5. The method of claim 1 wherein a said exposure field locations are detected by an automatic algorithm.

6. The method of claim 2 wherein a said exposure field locations are detected by an automatic algorithm.

7. The method of claim 5 wherein said automatic algorithm is as follows:
a method of processing a digital radiographic image comprising the steps of:
providing a digital radiographic image having a plurality of radiation field and collimation regions defined by collimation blades at least partially bounding said radiation fields; detecting and classifying pixels of said digital radiographic image as collimation boundary transition pixels using smart edge detection based on a classifier and a prior knowledge of the collimation process;
line-level delineating of a plurality of candidate collimation blades from said collimation boundary transition pixels modeled as step edges with polarity from said collimation boundary transition pixels;
determining a plurality of candidate partition blade pairs from a list of said candidate collimation blades includes using a multiple-pass method;
determining at a region level the radiation field from the results of said determining step;
wherein said estimating step includes the steps of:
determining a plurality of candidate partition blade pairs from said candidate collimation blades;
sorting said candidate partition blade pairs in to a list of such an order that said radiographic image can be continuously and recursively partitioned;
partitioning said radiographic image into a simple sub-image and a compound sub-image using the most likely partition blade pair on the said list, and taking said pair off said list thereafter;
repeating said partitioning process for said compound sub-image using the remaining partition blade pairs on said list; and
collecting candidate collimation blades that belong to each valid said simple sub-image.

8. The method of claim 6 where said automatic algorithm is as follows:
a method of processing a digital radiographic image comprising the steps of:
providing a digital radiographic image having a plurality of radiation field and collimation regions defined by collimation blades at least partially bounding said radiation fields;
detecting and classifying pixels of said digital radiographic image as collimation boundary transition pixels using smart edge detection based on a classifier and a prior knowledge of the collimation process;
line-level delineating of a plurality of candidate collimation blades from said collimation boundary transition pixels modeled as step edges with polarity from said collimation boundary transition pixels;
determining a plurality of candidate partition blade pairs from a list of said candidate collimation blades includes using a multiple-pass method;
determining at a region level the radiation field from the results of said determining step;
wherein said estimating step includes the steps of:
determining a plurality of candidate partition blade pairs from said candidate collimation blades;
sorting said candidate partition blade pairs in to a list of such an order that said radiographic image can be continuously and recursively partitioned;
partitioning said radiographic image into a simple sub-image and a compound sub-image using the most likely partition blade pair on the said list, and taking said pair off said list thereafter;
repeating said partitioning process for said compound sub-image using the remaining partition blade pairs on said list; and
collecting candidate collimation blades that belong to each valid said simple sub-image.

9. The method of claim 1 wherein said location of the exposure fields are manually selected by user input.

10. The method of claim 2 wherein said location of the exposure fields are manually selected by user input.

11. The method of claim 2 wherein said enhancement processing includes a window/level operation.

12. The method of claim 2 wherein said enhancement processing includes a window/level operation.

13. The method of claim 11 wherein said enhancement processing includes at least one monitor calibration LUT.

14. The method of claim 12 wherein said enhancement processing includes at least one monitor calibration LUT.

15. The method of claim 11 wherein said enhancement processing includes a tone scale LUT application.

16. The method of claim 12 wherein said enhancement processing includes a tone scale LUT application.

17. The method of claim 13 wherein said enhancement processing includes a tone scale LUT application.

18. The method of claim 14 wherein said enhancement processing includes a tone scale LUT application.

19. The method of claim 15 wherein said enhancement processing includes at least one unsharp masking operation.

20. The method of claim 16 wherein said enhancement processing includes at least one unsharp masking operation.

21. The method of claim 17 wherein said enhancement processing includes at least one unsharp masking operation.

22. The method of claim 18 wherein said enhancement processing includes at least one unsharp masking operation.

23. The method of claim 15 wherein said enhancement processing includes generation of a tone scale LUT.

24. The method of claim 16 wherein said enhancement processing includes generation of a tone scale LUT.

25. The method of claim 17 wherein said enhancement processing includes generation of a tone scale LUT.

26. The method of claim 18 wherein said enhancement processing includes generation of a tone scale LUT.

27. A computer storage product for use in a digital computer, that stores software for carrying out the method of claim 1.
